# EUROPEAN PATENT SPECIFICATION

(11) **EP 3 501 903 B1**
(45) Date of publication and mention of the grant of the patent: **05.02.2020**
(21) Application number: 17208327.1
(22) Date of filing: 19.12.2017
(51) Int. Cl.: B60R 9/058

(54) **LOAD CARRIER FOOT**
LASTTRÄGERFUSS
PIED SUPPORT DE CHARGE

(43) Date of publication of application: 26.06.2019
(60) Divisional application: 19209222.9
(73) Proprietor: Thule Sweden AB, 335 04 Hillerstorp (SE)
(72) Inventor: ANDERSSON, Stefan, 331 35 Värnamo (SE); LARSSON, Fredrik, 56791 Vaggeryd (SE)
(74) Representative: Wallentin, Lars

(56) References cited:
- EP-A1- 2 905 179
- DE-B3-102013 000 460
- GB-A- 927 818

## Description

### FIELD OF THE INVENTION

The present invention relates to a load carrier foot for supporting a load bar on a vehicle, a load carrier bracket for coupling a load carrier foot to a vehicle and to a load carrier comprising a load carrier foot and a load carrier bracket.

### BACKGROUND

Load carrier feet are an essential part of many load carrier systems. In particular, load carrier feet are an inherent component of load carrier systems in which a load bar is fixed to the roof of a vehicle.

There exist load carrier feet which are specifically designed to be used on vehicles which do not comprise a roof railing for fixing a load carrier foot. Such load carrier feet are typically coupled to the vehicle by means of a fixation bracket which is able to grab a portion of the car body. Each load carrier foot comprises a mechanism for tightening the fixation bracket to thereby clamp the load carrier foot to the vehicle roof. It is also known that the dimensions of vehicles vary and that, therefore, the load carrier systems need to be adapted to the different vehicle dimensions. DE 10 2013 000 460 B3 discloses a load carrier foot for a vehicle according to the preamble of claim 1.

A known issue is that the position of load carrier feet on a vehicle roof vary from vehicle to vehicle. In order to address this issue, it is known to use load carrier feet which can be used with different load carrier brackets. In this way, it is possible to manufacture load carrier brackets for different vehicle types while most components of the load carrier foot can remain unchanged. The load carrier brackets need to be able to transfer high forces and need to be securely coupled to the load carrier foot. Coupling the load carrier brackets with known load carrier feet is, however, often cumbersome. The load carrier foot needs to be able to transfer high forces on the load carrier bracket.

### SUMMARY

It is the object to provide an enhanced load carrier foot and an enhanced load carrier.

The object is solved by a load carrier foot according to independent claim 1. Advantageous further formations are subject of the dependent claims wherein specific further modifications can be gleaned from the following summary.

A load carrier foot for supporting a load bar on a vehicle is provided. The load carrier foot comprises a holder adapted to receive a load carrier bracket for coupling the load carrier foot to the vehicle. The holder comprises a sleeve portion defining an accommodating space which is configured to partially accommodate the load carrier bracket.

The sleeve portion creates a 3D structure that better withstands forces acting on the system. Since the holder comprises a sleeve portion, the overall strength of the bracket is enhanced. Thus, the holder is able to withstand higher forces. Therefore, the holder can be used for transferring higher forces on other elements like the load carrier bracket. In this way, it is possible to transfer all forces necessary for tightening the load carrier bracket via the holder.

The sleeve portion can comprise a box-like shape and can comprise an outer wall, an inner wall and two side walls.

Preferably, at least the sleeve portion is integrally formed by bending a metal sheet and preferably comprises an overlap section at which two joining sections of the bent metal sheet are overlapped. The overlap section can be quadrangular or trapezoidal shaped.

By integrally forming the sleeve portion and/or providing an overlapping section, the strength of the holder is further increased.

Preferably, the joining sections are joined by material forming, preferably by clinching or torxing, at at least two joining portions.

Preferably, the sleeve portion is formed such that the accommodating space is tapered in the longitudinal direction towards an upper portion of the holder. In other words, the sleeve portion can be formed in a funnel-shape comprising a wide lower end and a narrow upper end.

Such a configuration has the benefit that an insertion of the load carrier bracket is simplified because a wider portion is available on the insertion side of the sleeve portion. Furthermore, such a configuration provides room for a pivoting movement of the load carrier bracket.

Preferably, the overlap section defines an outer wall of the sleeve portion. The sleeve portion can further comprise an inner wall and two side walls. At least the side walls can be inclined with respect to the longitudinal direction in order to form the tapered accommodating space.

In this way, the outer wall of the sleeve portion comprises a higher strength compared to other walls of the sleeve portion which additionally qualifies the outer wall for a force transfer on the load carrier bracket.

Preferably, the sleeve portion comprises a coupling portion formed in the inner wall. The coupling portion can be formed as an accommodating recess configured to support a tightening member for applying a pushing force on the coupling portion. The accommodating recess can comprise a supporting surface. The supporting surface can be a curved surface. Furthermore, the accommodating recess can comprise an opening for passing a portion of the tightening member through the inner wall.

By providing a coupling portion on the inner wall of the sleeve portion, it is possible to apply a force on the inner wall of the sleeve portion for urging the sleeve portion, and thus the holder, in a tightening direction. With such a configuration, a tightening force received from the tightening member is directly applied on the sleeve portion and not on the load carrier bracket. In other words, a tightening force can be applied on the load carrier bracket only by means of the holder. Since the tightening member is not directly supported on the load carrier bracket, the bracket does not have to comprise a specifically formed supporting section or seat section allowing to properly support the tightening member.

The supporting surface can be configured to directly support the tightening member. It is also possible to indirectly support the tightening member on the supporting surface using an intermediate member.

Preferably, the sleeve portion has an upper edge portion at least partially defining an upper opening of the sleeve portion. The upper edge portion can be configured for an engagement with the load carrier bracket.

By providing an upper edge portion for an engagement with the load carrier bracket a simple and reliable engagement means is provided.

Preferably, the upper edge portion is convexly formed.

Convexly forming the upper edge portion allows a load carrier bracket hooked thereon to move along the upper edge portion during a tightening process. Furthermore, in case the load carrier bracket is oriented slightly obliquely in the sleeve portion a tightening force can be securely transferred on the load carrier bracket via the upper edge portion.

Preferably, the load carrier foot further comprises an urging member configured to apply a pushing force on an engaging section of the load carrier bracket towards the upper edge portion. The urging member can be a spring element. The urging member can be arranged in the accommodating space.

The presence of the urging member leads to a configuration in which the load carrier bracket automatically snaps on the upper edge portion so that the load carrier bracket is securely hooked on the upper edge portion. Furthermore, the urging member acts as a securing device in that the load carrier bracket remains securely hooked on the upper edge portion unless a user applies a force on the load carrier bracket moving the same against the urging force of the urging member. In the state wherein no bracket is inserted in the accommodating space, the urging member can be unloaded or can already be pretensioned.

Preferably, the bracket holder comprises a lower edge portion at least partially defining a lower opening of the sleeve portion. The lower edge portion is configured to contact the load carrier bracket and to transfer a pushing force on the load carrier bracket.

Due to the sleeve shape of the holder higher forces can be transferred via the lower edge portion of the holder.

The load carrier foot can be specifically designed for supporting the load bar. The load carrier foot can comprise a support member which can be a rear cover of the load carrier foot, i.e. a cover which is arranged on the vehicle side or which is facing towards the vehicle center when the load carrier foot is mounted on the vehicle. The load carrier foot can comprise a foot pad for contacting the vehicle roof and for transferring a load onto the vehicle roof. The support member, e.g. the rear cover, can be movably, e.g. rotatably, supported on the foot pad. More precisely, a lower portion of the support member can be specifically designed to be supported on an upper side of the foot pad. Furthermore, the support member can be configured to support the load bar thereon. In other words, the upper portion of the support member can be configured to support a load bar thereon. Thus, the support member or rear cover is able to transfer a load received from a load bar onto the foot pad. In this way, a major part of a normal force applied on the load carrier foot by the load bar is directly transferred to the foot pad by means of the support member. The configuration can be such that the foot pad only receives forces from the support member, e.g. the rear cover.

According to a further aspect, a load carrier bracket for coupling a load carrier foot to a vehicle is provided. The load carrier bracket comprises a vehicle engaging section and a trough-shaped coupling portion. The trough-shaped coupling portion extends from the vehicle engaging section in longitudinal direction of the load carrier bracket and comprises a holder engaging section engageable with a holder of a load carrier foot.

By three-dimensionally forming the load carrier bracket in the above described way, the rigidity and strength of the load carrier bracket is increased.

Preferably, the trough-shaped coupling portion is funnel-shaped with the holder engaging section being formed at a narrow end. In addition or alternatively, the trough-shaped coupling portion is continuously convexly formed in its longitudinal direction and comprises an outer surface adapted to receive a force from the holder of the load carrier foot.

By providing a continuously convex formed trough-shaped coupling portion, it is possible to apply higher forces on the outer side of the coupling portion, for example by means of a lower edge of the above mentioned holder.

Preferably, the trough-shaped coupling portion extends substantially over the entire length of the bracket. In addition or alternatively, the trough-shaped coupling portion at least partially comprises a box-like shape. For example, the trough-shaped coupling portion can comprise two side walls and a bottom wall which is arranged substantially perpendicular to the side walls.

With the latter configuration, the rigidity and strength of the load carrier bracket is even more enhanced.

Preferably, the holder engaging section is configured such that the load carrier bracket can be hooked on the holder. The holder engaging section can comprise two hooks.

According to a further aspect, a load carrier comprising a load carrier foot as described before and a load carrier bracket as described before is disclosed. The load carrier bracket can be partially accommodated in the accommodating space and releasably engaged with the holder. The load carrier foot can further comprise a tightening member having a tightening member operating portion arranged in the accommodating space between an inner wall of the holder and the load carrier bracket. The holder and the load carrier bracket can comprise access openings configured to provide tool access to the tightening member operating portion.

The load carrier can comprise a load bar which is coupled to the load carrier foot. The load carrier foot can comprise the above described holder. Furthermore, the above described load carrier bracket can be inserted in the holder. The load carrier foot can comprise a foot pad which is brought in contact with the roof of a vehicle when the load carrier is mounted. The holder can be operatively coupled with a tightening mechanism of the load carrier foot. The tightening mechanism can be operated by the tightening member. The tightening mechanism can be configured to effect a movement of the holder and to operate a locking mechanism for securely locking the load bar to the load carrier foot when the tightening member is operated.

The locking mechanism can be configured to clamp the load bar on a supporting portion of the load carrier foot, which can be a portion of the rear cover. The supporting portion can be an integral part of the rear cover of the load carrier foot. The rear cover can also be referred to as support member for supporting the load bar thereon. The supporting portion can comprise a supporting surface formed in the rear cover. Accordingly, the rear cover can acts as a support for supporting the load bar. In other words, the load bar can be supported on an upper portion of the rear cover. The rear cover can be supported on the foot pad. More precisely, the rear cover can comprise a coupling portion which is engaged with the foot pad. The foot pad can be adapted to contact the vehicle roof and for transferring a load onto the vehicle roof. The rear cover can be movably, e.g. rotatably, supported on the foot pad. More precisely, a lower portion of the rear cover can be specifically designed to be supported on an upper side of the foot pad. Thus, the rear cover can be able to transfer a load received from a load bar onto the foot pad. In this way, a major part of a normal force applied on the load carrier foot by a load carried on the load bar is directly transferred to the foot pad by means of the rear cover. The configuration can be such that the foot pad only receives forces from the rear cover.

### BRIEF DESCRIPTION OF THE DRAWINGS

Fig. 1 shows a side view of a load carrier foot according to an embodiment.
Fig. 2 shows a perspective and sectional view of an assembly of the load carrier foot.
Fig. 3 shows a perspective view of a holder according to an embodiment.
Fig. 4 shows a perspective and sectional view of the holder of Fig. 3.
Fig. 5 shows a perspective view of a load carrier bracket according to an embodiment.
Fig. 6 shows a perspective and sectional view of the load carrier bracket of Fig. 5.
Fig. 7 shows a perspective rear view of the holder of Fig. 3.
Fig. 8 shows a perspective rear view of the load carrier bracket of Fig. 5.
Fig. 9 shows a top view of an assembly comprising a holder and a load carrier bracket.
Fig. 10 shows a side view of the assembly of Fig. 9.
Fig. 11 shows a perspective sectional view of the holder.
Fig. 12 shows a sectional side view of a load carrier foot mounted to a load bar and comprising a load carrier bracket.
Fig. 13 shows a perspective view of a holder.
Fig. 14 shows a perspective sectional view of a load carrier foot carrying a load bar.
Fig. 15 shows a side view of the upper part of the load carrier bracket according to an embodiment.
Fig. 16 shows a front view of the load carrier bracket of Fig. 15.
Fig. 17 shows a side view of a load carrier bracket according to an embodiment.
Fig. 18 shows a front view of the load carrier bracket of Fig. 17.
Fig. 19 shows a side view of a load carrier bracket according to an embodiment.
Fig. 20 shows a front view of the load carrier bracket of Fig. 19.
Fig. 21 shows a side view of a load carrier bracket according to an embodiment.
Fig. 22 shows a front view of the load carrier bracket of Fig. 21.
Fig. 23 shows a side view of a load carrier bracket according to an embodiment.
Fig. 24 shows a front view of the load carrier bracket of Fig. 23.
Fig. 25 shows a side view of a load carrier bracket according to an embodiment.
Fig. 26 shows a front view of the load carrier bracket of Fig. 25.
Fig. 27 shows a side view of a load carrier bracket according to an embodiment.
Fig. 28 shows a front view of the load carrier bracket of Fig. 27.
Figs. 29 to 32 show perspective views of an assembly comprising a load carrier bracket and a holder.

### DETAILED DESCRIPTION OF EMBODIMENTS

In the following, embodiments will be described with reference to the drawings. It is to be noted that similar elements in the drawings are denoted with the same reference signs.

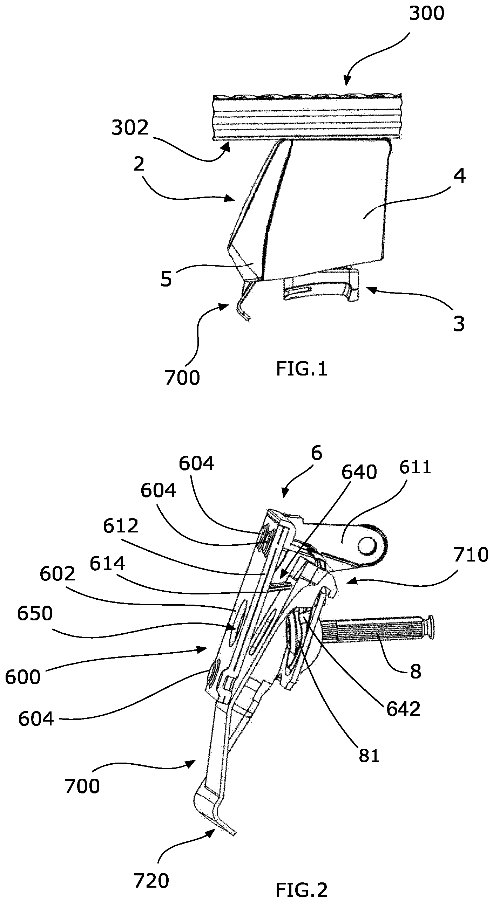

Fig. 1 shows a side view of an assembly comprising a load carrier foot 2 according to an embodiment. A load bar 300 is supported on an upper portion of the load carrier foot 2. More precisely, an outer surface 302 of the load bar 300 is supported on the upper portion of the load carrier foot 2. Furthermore, a load carrier bracket 700 is inserted into and fixedly held in the load carrier foot 2. The load carrier foot 2 further comprises a foot pad 3. The foot pad 3 is configured to be supported on the roof of a vehicle. As is further shown in Fig. 1, the load carrier foot 2 comprises a front cover 5 and a rear cover 4 which cover an interior mechanism of the load carrier foot 2.

Fig. 2 shows an assembly comprising a holder 6, a load carrier bracket 700 inserted into and coupled with the holder 6, an urging member 640 for exerting a pushing force on the load carrier bracket 700, and a tightening member 8 force transmittingly coupled to the holder 6 at an operating portion 81 thereof.

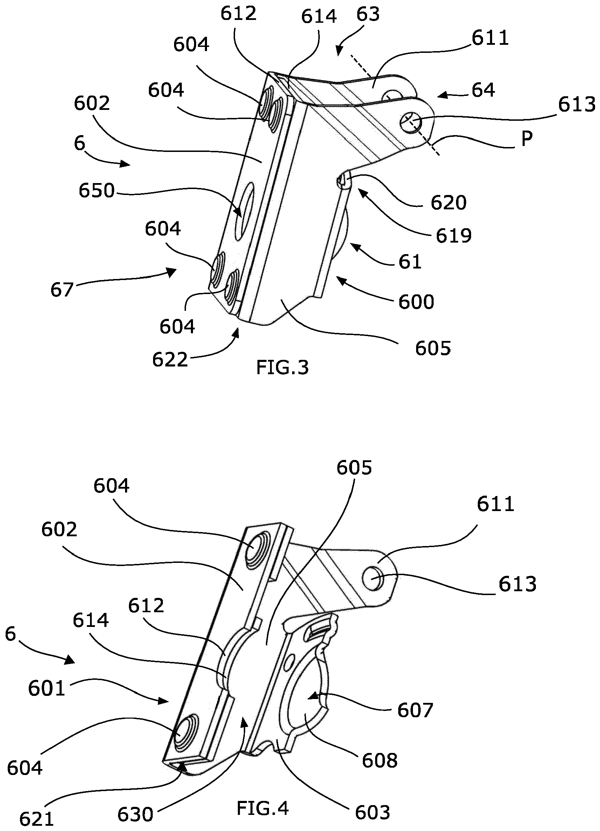

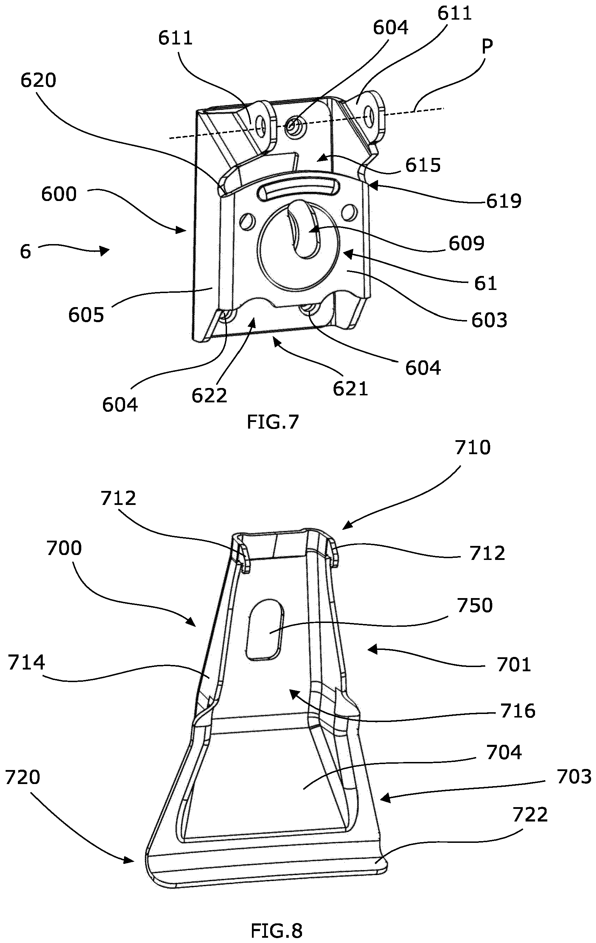

The configuration of the holder 6 will be further described with reference to Figs. 3, 4 and 7. The holder 6 comprises a sleeve portion 600 which is formed in a lower portion 67 of the holder 6. The sleeve portion 600 comprises a box-like shape and comprises an outer wall 602, an inner wall 603 and two side walls 605 connecting the inner wall 603 with the outer wall 602.

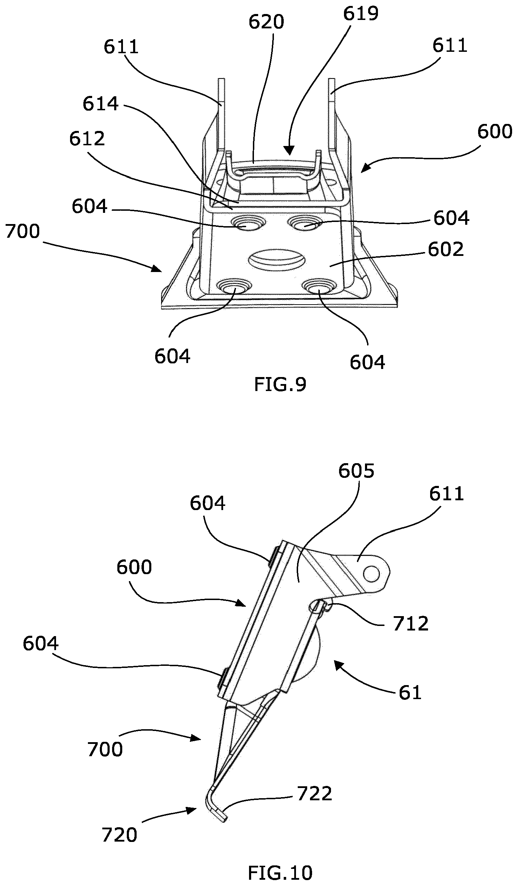

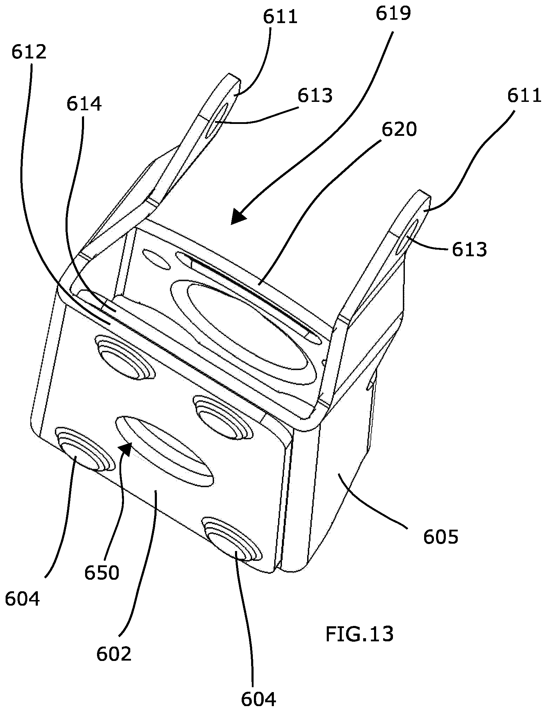

The holder 6 is integrally formed by bending a metal sheet into the described shape. The outer wall 602 is defined by an overlap section 601 which is formed by two joining sections 612, 614 of the metal sheet. The joining sections 612, 614 are arranged parallel and in contact with each other. More precisely, the joining sections 612, 614 are joined with each other by press-forming them together. In the present case, the joining sections 612, 614 are clinched together at four joining portions 604. Accordingly, the outer wall 602 is reinforced by using two layers of sheet metal that are joined to each other. As is visible in Figs. 9 and 13, the joining sections 612, 614, which can also be referred to as overlapping flanges, can extend across the entire width of the holder. This is also depicted in Fig. 13. As is also visible in the drawings, the sleeve portion has a completely closed shape encasing an accommodating space 630 in which the load carrier bracket 700 can be at least partially accommodated as is shown in the configuration of Fig. 2.

The sleeve portion 600 is open on both longitudinal sides. In other words, the sleeve portion 600 comprises a lower opening 622 and an upper opening 615. The lower opening 622 is partially defined by a lower edge portion 621 which in the present case is a lower edge of the outer wall 602. The lower edge portion 621 can also be referred to as force application section as this portion is provided for transferring a force from the holder 6 on a load carrier bracket 700 as will be described later.

Since the holder 6 comprises the above described sleeve portion the holder 6 is able to withstand higher forces so that it is possible to transfer higher forces by means of the lower edge portion 621.

The upper opening 615 of the sleeve portion 600 is partially defined by an upper edge portion 619. The upper edge portion 619 corresponds to the upper edge of the inner wall 603 and is configured for an engagement with the load carrier bracket 700. More precisely, the upper edge portion 619 is convexly formed and comprises a curved supporting surface 620 which faces in the upper direction of the holder 6.

As is also shown in the drawings, the outer wall 602 comprises an access opening 650 providing access to the accommodating space 630 from a front side of the load carrier foot 2. This access opening 650 is designed such that a tool for operating the tightening member 8 can be inserted into the accommodating space 630.

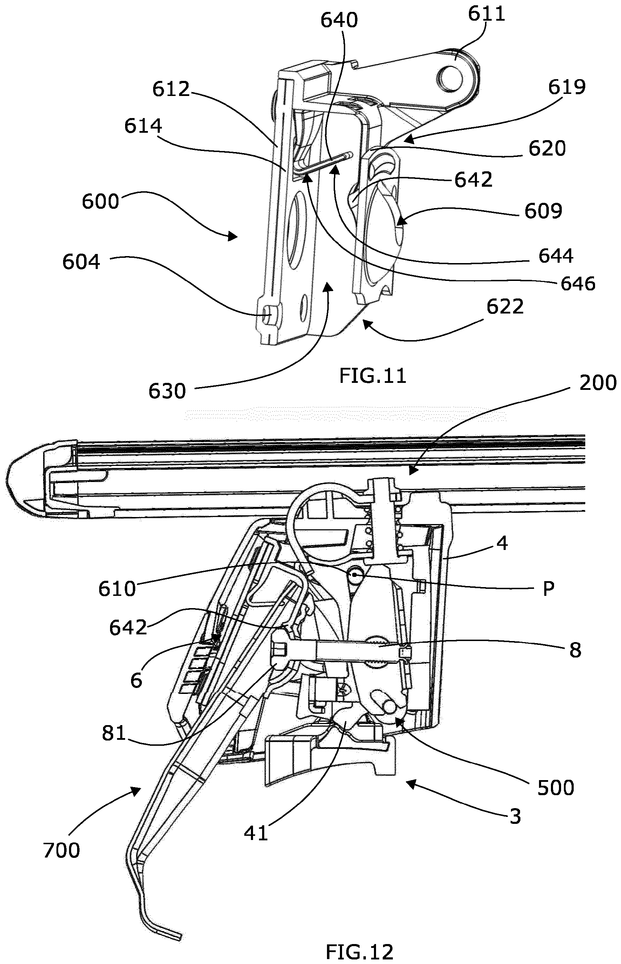

Furthermore, the holder 6 comprises an upper portion 63 which comprises a coupling portion 64. The coupling portion 64 comprises two arms 611 each having an opening 613 for accommodating a pivot pin 610 therein. The pivot pin 610 is shown in Fig. 12 and defines a pivot axis P. In other words, the pivot axis P extends through the centers of the openings 613. Accordingly, the holder 6 is configured for a pivoting movement about pivot axis P. By pivoting the holder 6, a load carrier bracket 700 inserted in the holder 6 can be tightened as will be described later.

The holder 6 comprises a coupling section 61 for supporting the tightening member 8. The tightening member 8 is an element which transfers a pushing force on the coupling portion 61 upon operation of the same. The coupling portion 61 comprises an accommodating recess 607 which is formed in the inner wall 603. The accommodating recess 607 comprises a supporting surface 608 which is formed in a spherical manner.

An opening 609 is provided in the supporting surface 608 allowing to pass a portion of the tightening member through the inner wall 603. Here, the opening is an elongate opening extending along the longitudinal direction of the sleeve portion 600. The elongate opening can have an extension length allowing to insert the tightening member via the lower opening 622. In this case, it is possible to provide an access opening 650 which is smaller than an access opening through which the tightening member 8 is to be inserted. This enhances the rigidity of the sleeve portion 600.

Accordingly, it is possible to support an end portion of the tightening member 8 on the supporting surface 608 and coupling the other end to a further element. Thus, the tightening member 8 is a pulling force transmitting element. More precisely, the tightening member 8 is a shaft nut having an operating portion 81.

As can be gathered from Fig. 2 and Fig. 12, the operating portion 81 comprises an engaging section in the form of a hexagon socket which can be reached via the above described access opening 650. The supporting surface 608 can be used to directly support the tightening member 8. However, in the configuration as described, an intermediate member 642 (see Fig. 2, Fig. 11 and Fig. 12) is provided on the supporting surface 608 and the tightening member 8 is supported on the intermediate member 642. The intermediate member 642 can cover an upper portion of the opening 609 so that the tightening member 8 is supported more properly. The intermediate member 642 can be made of a softer material. In the present configuration, the intermediate member 642 is made from plastics.

As mentioned above, an urging member 640 is provided. The urging member 640 is an elastic element which is accommodated in the accommodating space 630. In the configuration as shown in Fig. 11, the urging member 640 comprises a hook-like shape when viewed from the side. The urging member 640 comprises a contact section 644 protruding into the accommodating space 630 from the outer wall side towards the inner wall side and a supporting section 646 which is accommodated in a recess formed on the inner side of the outer wall, more precisely in the inner joining section 614. In Fig. 11, the urging member 640 is shown in an unloaded state and, therefore, the contact section is substantially straight. As already mentioned before, the urging member 640 is configured to apply an urging force on an inserted load carrier bracket 700 in order to urge the load carrier bracket towards the inner wall 603. The urging member can be made from plastics and can be integrally formed with the intermediate member 642 as described before.

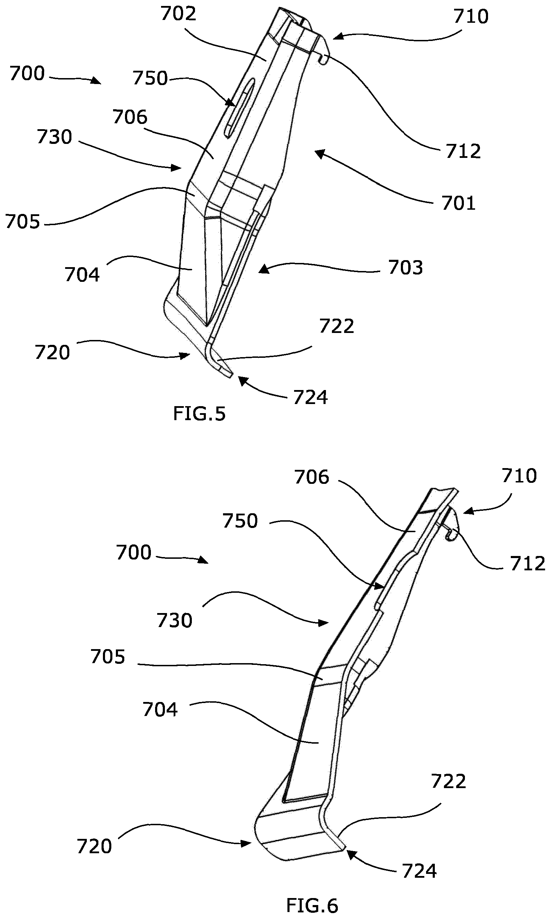

A load carrier bracket 700 which can be used with the above holder 6 will be described in the following with reference to Figs. 5, 6 and 8.

The load carrier bracket 700 comprises a vehicle engaging section 720 and a trough-shaped coupling portion 730. The vehicle engaging section 720 is configured to securely grab a portion of a vehicle body. In other words, the vehicle engaging portion 720 is specifically designed so as to fit to a specific vehicle body. As is shown, the vehicle engaging section 720 is a bent or angled portion which is coupled to the trough-shaped coupling portion 730 at one end. At its other end, the vehicle engaging section 720 comprises a free end 724 which protrudes in a direction which is angled with respect to or substantially perpendicular to a longitudinal extension direction of the trough-shaped coupling portion 730. On the free end 724, a contact surface 722 is provided which, when the load carrier foot is clamped on the vehicle roof, is pushed against the vehicle body. The vehicle engaging section 720 is configured, such that the free end 724 can be inserted into a suitable space provided on the vehicle, a space between a closed vehicle door and the vehicle body for instance.

The trough-shaped coupling portion 730 extends from the vehicle engaging section 720 in the longitudinal direction of the load carrier bracket 700. Furthermore, the trough-shaped coupling portion 730 comprises a holder engaging section 710 which is engageable with the holder 6 of a load carrier foot 2. The trough-shaped coupling portion 730 is funnel-shaped wherein the holder engaging section 710 is formed at an narrow end of the trough-shaped coupling portion 730.

Moreover, the trough-shaped coupling portion 730 is continuously convexly formed in its longitudinal direction and comprises an outer surface 702 adapted to receive a force from the holder 6 of the load carrier foot 2. In the context of this disclosure, continuously convexly formed means that there is a wall portion which is continuously convexly formed providing the load carrier bracket with a continuous bulging. Furthermore, continuously convexly formed means that the course of a section in longitudinal direction of the load carrier bracket is curved in only one direction and does not comprise any curvatures in the opposite direction. It is to be noted, that curved is not to be understood in the strict sense that every section has to be curved. Rather, as is shown in the drawings, substantially straight sections 704, 706 can be provided which are connected by a curved section 705 resulting in an overall curved shape.

The load carrier bracket can be formed symmetrical with respect to a middle plane at least in sections. Since the load carrier bracket has to fit to different types of vehicles, it is necessary to form the vehicle engaging section 720 according to the vehicle body of the vehicle.

Accordingly, a lower portion 703 of the load carrier bracket 700 has to be formed corresponding to the vehicle body type. On the other hand, the configuration of the load carrier foot 700 remains the same for different vehicles at least regarding the fixation and engagement of the load carrier bracket 700. Therefore, an upper portion 701 of the load carrier bracket 700 which is inserted into the holder 6 can always be formed in the same manner. In practice, it turned out that the section-wise forming of the load carrier bracket 700, i.e. the separate forming of the upper portion 701 and the lower portion 703, is cost efficient as it allows the use of one and the same tool for forming the upper portion 701. In this way, only a respective specific smaller tool have to be provided for forming the lower portion 703.

The trough-shaped coupling portion 730 extends substantially over the entire length of the bracket 700 and is uninterrupted. In other words, only a single trough-shaped coupling portion is provided. Furthermore, the trough-shaped coupling portion 730 at least partially comprises a box-like shape. More precisely, the trough-shaped coupling portion 730 comprises two side walls 714 and a bottom wall 716 which is arranged substantially perpendicular to the side walls 714. The bottom wall 716 and, consequently, the outer surface 702 is convexly shaped giving the overall load carrier bracket 700 a convex shape when viewed from the side. In other words, the trough-shaped coupling portion 730 provides a bulging in only one direction. The bulging is provided on a side of the load carrier bracket 700 opposite to the side where the free end 724 of the vehicle engaging section 720 is provided. In the shown configuration, the bottom wall 716 comprises a curved section 705 arranged between two substantially flat sections 704, 706 so that the overall configuration is curved in only one direction. In other words, the bottom wall 716 does not comprise a portion which is curved in the opposite direction.

The holder engaging section 710 is configured such that the load carrier bracket 700 can be hooked on the holder 6. In the shown configuration, the holder engaging section 710 comprises two hooks 712 which are arranged at a distance to each other in lateral direction of the load carrier bracket 700. The hooks 712 are configured such that they can be engaged with the upper edge portion 619 of the sleeve portion 600 of the holder 6. The hooks 712 and the free end 724 of the vehicle engaging section 720 can be referred to as protrusions of the load carrier bracket 700 which protrude from the same side of the load carrier bracket 700. More precisely, when the load carrier bracket 700 is inserted in the load carrier foot 2 and the load carrier foot 2 is mounted on a vehicle, the hooks 712 and the free end 724 protrude towards the vehicle. In other words, the load carrier bracket 700 is inserted into the holder 6 such that the hooks 712 are located on the side of the inner wall 603 of the holder.

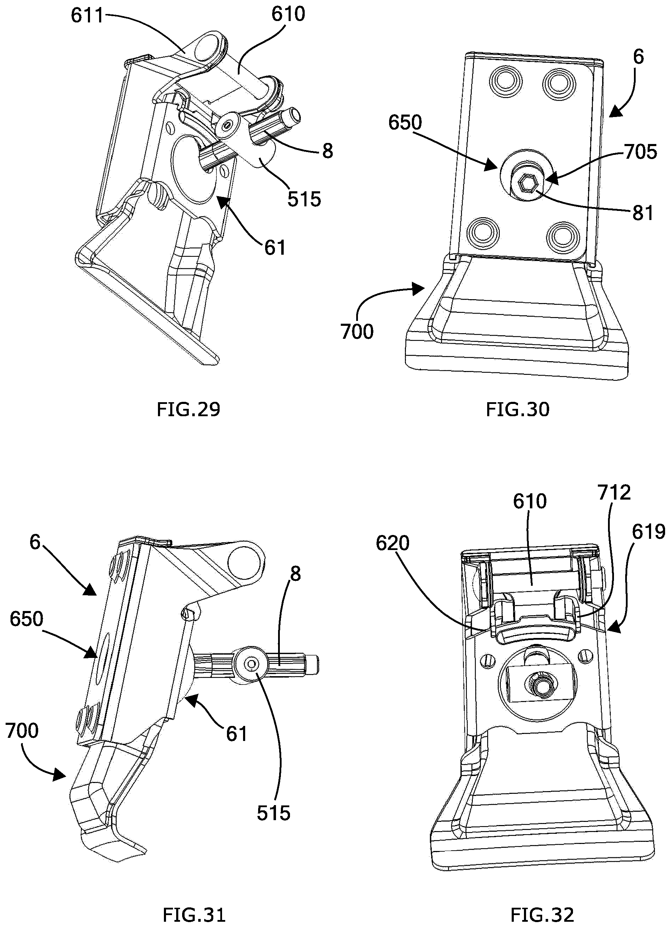

Assemblies where the above described load carrier bracket 700 is inserted into a holder 6 are shown in Figs. 2, 9, 10, 12 and 29 to 32.

The load carrier bracket 700 is inserted into the holder 6 from below. The upper portion 701 of the load carrier bracket 700 is inserted into the sleeve portion 600 through the lower opening 622 up to a position where the holder engaging section 710 partially protrudes from the upper opening 615. More precisely, the load carrier bracket 700 is brought into a position in which the hooks 712 are located above the upper edge portion 619 so that the hooks 712 can be brought in contact with the supporting surface 620 of the upper edge portion 619.

As described above, the holder 6 comprises the urging member 640. Upon inserting the bracket, the urging member 640 comes into contact with the upper portion 701 of the load carrier bracket 700 and pushes the holder engaging section 710 inward, i.e. towards the upper edge portion 619 so that the hooks 712 are brought into position for an engagement with the upper edge portion 619 and are held there. Accordingly, the load carrier bracket is securely held on the upper edge portion 619 and can only be removed when the load carrier bracket 700 is moved such that the holder engaging section 710 is moved against the urging force of the urging member 640.

As mentioned before, the upper edge portion 619 is convexly curved and the hooks 712 are arranged at a distance with respect to each other. Thus, the load carrier bracket 700 is supported on the upper edge portion at two different points. The upper edge portion is wider than the width of the holder engaging section 710 leading to a configuration in which the hooks can slide on the surface 620. In other words, the upper portion 701 of the load carrier bracket 700 is formed such that the load carrier bracket is hingedly held on the upper edge portion 619. This allows a pivoting movement of the load carrier bracket 700 about the center of the curvature of the surface 620. In this way, the load carrier bracket can orient itself according to the shape of the vehicle body when the same is tightened by moving the holder 6.

As soon as the load carrier bracket 700 is engaged with the holder 6 in the above described way, the holder 6 can be rotated about the pivot axis P in counterclockwise direction in Fig. 3 in order to tighten the load carrier bracket 700. The rotation of the holder 6 is effected by an operation of the tightening member 8 which is supported on the inner wall 603 of the holder 6. By moving the holder 6, the load carrier bracket 700 is clamped between the holder 6 and the vehicle body. More precisely, the lower edge portion 621 of the holder 6 is moved towards the vehicle when the tightening member is tightened which leads to a state in which the lower edge portion 621 contacts the outer surface 702 of the load carrier bracket 700 such that the lower edge portion 621 contacts the outer surface 702 right above the curved section 705 in order to push the load carrier bracket towards the vehicle.

Furthermore, the holder 6 is held such that the pivot axis P also moves upward during the tightening process. Since the load carrier bracket 700 is supported on the upper edge portion 619 of the holder, a movement of the holder in the upward direction pulls the load carrier bracket in the upward direction so that the contact surface 722 is moved upwards and brought into firm contact with the vehicle body. Due to the shape of the holder and the shape of the bracket, it is possible to generate a higher clamping force.

As is shown in the figures, the load carrier bracket 700 comprises an access opening 750. The access opening 750 is provided such that when the load carrier bracket 700 is hooked into the holder 6 in the above described way, the access opening 750 is aligned with the access opening 650 of the holder 6. Since both openings are aligned, it is possible to reach the operating portion 81 of the tightening member 8 from the outside by passing a tool through the openings. Due to this configuration, it is possible to support the tightening member on the inner wall 603 of the holder 6. Furthermore, it is possible to insert the tightening member 8 into the holder 6 prior to the insertion of the load carrier bracket 700.

A possible use of the above assembly comprising the load carrier bracket 700 and the holder 6 in a load carrier is shown in Fig. 12. The load carrier comprises a load bar 300 which is coupled to a load carrier foot 2. The load carrier foot 2 comprises the above described holder 6. Furthermore, the above described load carrier bracket 700 is inserted in the holder 6. The load carrier foot 2 comprises a foot pad 3 which is brought in contact with the roof of a vehicle when the load carrier is mounted. The holder 6 is operatively coupled with a tightening mechanism 500 of the load carrier foot 2. The tightening mechanism 500 is operated by the tightening member 8. The tightening mechanism 500 is configured to effect a movement of the holder 6 in the above described way about the pivot axis P and to operate a locking mechanism 200 for securely locking the load bar 300 to the load carrier foot 2 when the tightening member 8 is operated. For that, the tightening member 8 is threadedly engaged with a pin 515 which is pivotably held in a force distribution member of the tightening mechanism 500. The force distribution member transfers an input force on two application sections.

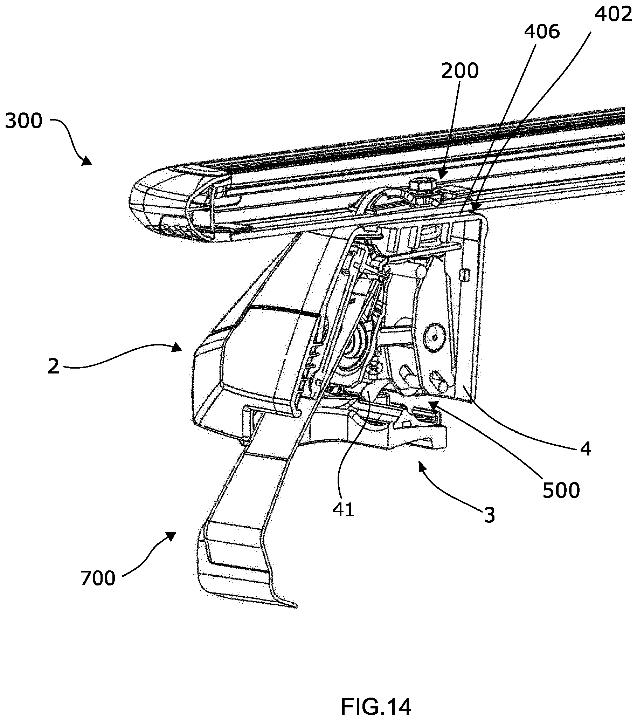

Fig. 14 shows a perspective view sectional view of a load carrier comprising a load bar 300, a load carrier foot 2 supporting the load bar 300 and the load carrier bracket 700. The load carrier foot 2 comprises the locking mechanism 200 for locking the load bar 300 on the load carrier foot 2, more precisely for clamping the load bar 300 on a supporting portion 402 of the load carrier foot 2, which is a portion of the rear cover 4. In the disclosed configuration, the supporting portion 402 is an integral part of the rear cover 4 of the load carrier foot 2. The rear cover 4 can also be referred to as support member 400 for supporting the load bar thereon. The supporting portion 402 comprises a supporting surface 406 formed in the rear cover 4. Accordingly, the rear cover 4 acts as a support for supporting the load bar 300. In other words, the load bar 300 is supported on an upper portion of the rear cover 4. The rear cover 4 is supported on the foot pad 3. More precisely, the rear cover 4 comprises a coupling portion 41 which is engaged with the foot pad 3. This coupling portion is shown in Figs. 12 and 14. The foot pad 3 is adapted to contact the vehicle roof and for transferring a load onto the vehicle roof. The rear cover, can be movably, e.g. rotatably, supported on the foot pad. More precisely, a lower portion of the rear cover can be specifically designed to be supported on an upper side of the foot pad 3. Thus, the rear cover 4 is able to transfer a load received from a load bar 300 onto the foot pad 3. In this way, a major part of a normal force applied on the load carrier foot 2 by the load bar 300 is directly transferred to the foot pad 3 by means of the rear cover. The configuration is such that the foot pad 3 only receives forces from the rear cover.

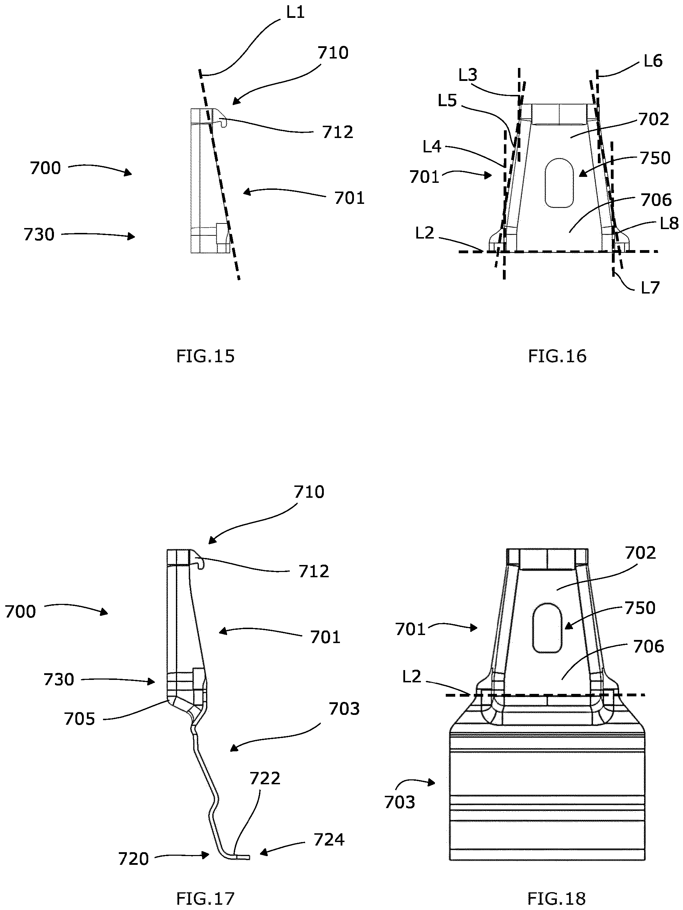

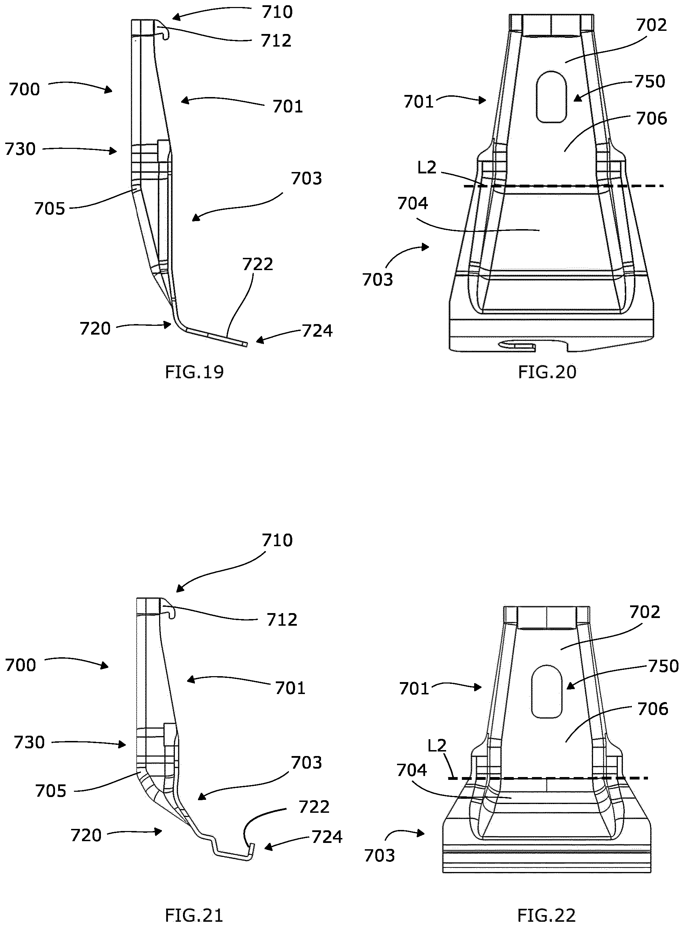

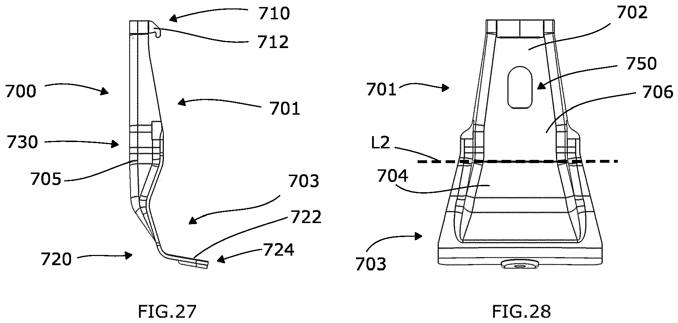

Further embodiments of load carrier brackets will be described in the following with reference to Figs. 15 - 28.

Fig. 15 shows a side view of the upper portion 701 of the load carrier bracket 700. This upper portion 701 is formed as described with reference to Figs. 5, 6 and 8 and is identical in all further described embodiments. In Fig. 15 the line L1 indicates a first characteristic of the upper part 701. More precisely, the bracket 700 widens from the holder engaging section 710 towards the lower portion 703 when viewed from the side. In other words, the width of the side walls 714 increases towards the above mentioned curved section 705 which marks a lower end of the upper part 701. The boundary between the upper portion 701 and the lower portion 703 is formed by the lower end portion as shown in Fig. 15 and indicated by line L2 in Fig. 16 which is a front view of the upper portion 701 of the load carrier brackets 700. The side walls 714 can be inclinded with respect to the longitudinal direction of the load carrier bracket 700 in order to fit to the accommodating space 630 as formed in the holder 6. More precisely, the side walls 714 are arranged at an angle such that the load carrier bracket 700 widens from the holder engaging section 710 towards the lower portion 703 when viewed from the front as can be the case with the side walls of the holder described above. The inclination of the side walls is depicted by lines L5 and L8 in Fig. 16. As is further shown in Fig. 16, the upper portion 701 can comprise side wall sections which are formed parallel with respect to each other and parallel to the longitudinal extension direction of the load carrier bracket 700. These side wall sections can be formed in the area of the holder engaging section 710 and the lower end of the upper part 701 on the opposite side of the upper part 701. The extension of the side wall sections is depicted by lines L3, L4, L6 and L7.

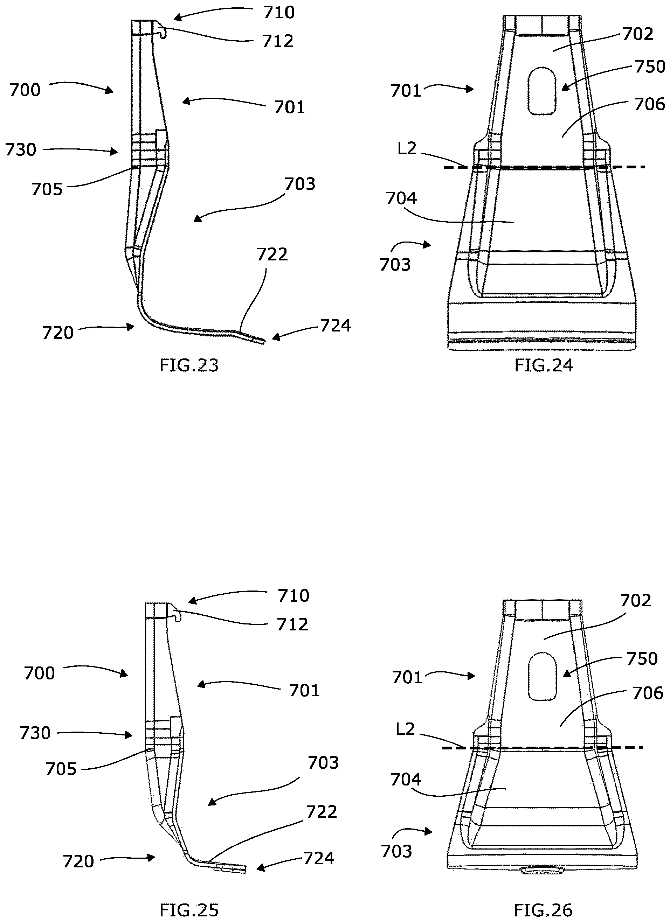

The lower portion 703 is different in every embodiment. More precisely, the lower portion 703 is respectively adapted to fit to different vehicles. Example shapes of the load carrier bracket 700, i.e. specific shapes of the lower portion 703 are shown in Figs. 17 to 28. The shapes vary in the lower portion 703, for example regarding the trough-shaped portion in formed in the lower portion 703 and regarding the vehicle engaging section 720. Most of the shapes follow the above general shape as described before and are convexly shaped. For example, in Fig. 23, an embodiment is shown in which the curved section 705 is bent in opposite direction compared to other embodiments.

## Claims

1. Load carrier foot (2) for supporting a load bar (300) on a vehicle, said load carrier foot (2) comprising a holder (6) adapted to receive a load carrier bracket (700) for coupling said load carrier foot (2) to said vehicle, **characterized in that** said holder (6) comprises a sleeve portion (600) defining an accommodating space (630) which is configured to partially accommodate said load carrier bracket (700).

2. Load carrier foot (2) according to claim 1, wherein at least said sleeve portion (600) is integrally formed by bending a metal sheet and comprises an overlap section (601) at which two joining sections (612, 614) of said bent metal sheet are overlapped, wherein said overlap section (601) is preferably quadrangular or trapezoidal shaped.

3. Load carrier foot (2) according to claim 2, wherein said joining sections (612, 614) are joined by material forming, preferably by clinching or torxing, at at least two joining portions (604).

4. Load carrier foot (2) according to claim 2 or 3, wherein said sleeve portion (600) is formed such that said accommodating space (630) is tapered in the longitudinal direction towards an upper portion (63) of said holder (6).

5. Load carrier foot (2) according to claim 4, wherein said overlap section (601) defines an outer wall (602) of said sleeve portion (600), and wherein said sleeve portion (600) further comprises an inner wall (603) and two side walls (605), wherein at least said side walls (605) are inclined with respect to the longitudinal direction in order to form said tapered accommodating space (630).

6. Load carrier foot (2) according to claim 5, wherein said sleeve portion (600) comprises a coupling portion (61) formed in said inner wall (603), said coupling portion (61) preferably being formed as an accommodating recess (607) configured to support a tightening member (8) for applying a pushing force on said coupling portion (61), said accommodating recess (607) preferably having a supporting surface (608), preferably a curved surface, and an opening (609) for passing a portion of said tightening member (8) through said inner wall (603).

7. Load carrier foot (2) according to one of the preceding claims, wherein said sleeve portion (600) has an upper edge portion (619) at least partially defining an upper opening (615) of said sleeve portion (600), wherein said upper edge portion (619) is configured for an engagement with said load carrier bracket (700).

8. Load carrier foot (2) according to claim 7, wherein said upper edge portion (619) is convexly formed.

9. Load carrier foot (2) according to claim 7 or claim 8, further comprising an urging member (640), preferably a spring element, being configured to apply a pushing force on a holder engaging section (710) of said load carrier bracket (700) towards said upper edge portion (619), said urging member (640) being preferably arranged in said accommodating space (630).

10. Load carrier foot (2) according to one of the preceding claims, wherein said holder (6) comprises a lower edge portion (621) at least partially defining a lower opening (622) of said sleeve portion (600), wherein said lower edge portion (621) is configured to contact said load carrier bracket (700) and to transfer a pushing force on said load carrier bracket (700).

11. Load carrier comprising a load carrier foot (2) according to claims 1 to 10 and a load carrier bracket (700) for coupling said load carrier foot (2) to a vehicle, said load carrier bracket (700) comprising a vehicle engaging section (720) and a trough-shaped coupling portion (730), said trough-shaped coupling portion (730) extending from said vehicle engaging section (720) in longitudinal direction of the load carrier bracket (700) and comprising a holder engaging section (710) engageable with said holder (6) of said load carrier foot (2).

12. Load carrier according to claim 11, wherein said trough-shaped coupling portion (730) is funnel-shaped with said holder engaging section (710) being formed at a narrow end and/or wherein said trough-shaped coupling portion (730) is continuously convexly formed in its longitudinal direction and comprises an outer surface (702) adapted to receive a force from said holder (6) of said load carrier foot (2).

13. Load carrier according to one of claims 11 and 12, wherein said trough-shaped coupling portion (730) extends substantially over the entire length of the bracket (700) and/or at least partially comprises a box-like shape, preferably with two side walls (714) and a bottom wall (716) which is arranged substantially perpendicular to said side walls (714).

14. Load carrier according to one of claims 11 to 13, wherein a free end (724) of the vehicle engaging section (720) protrudes from said load carrier bracket (700) on one side in a direction which is angled with respect to or is substantially perpendicular to a longitudinal extension direction of the trough-shaped coupling portion (730) and wherein said trough-shaped coupling portion (730) provides a bulging which is provided on a side of said load carrier bracket (700) opposite to the side where said free end (724) of the vehicle engaging section (720) protrudes from said load carrier bracket, and/or wherein said trough-shaped coupling portion (730) provides said bulging in only one direction, wherein said bulging is preferably a continuous and/or uninterrupted bulging.

15. Load carrier according to one of claim 11 and 12, wherein said holder engaging section (710) is configured such that said load carrier bracket (700) can be hooked on said holder (6) and wherein said holder engaging section (710) preferably comprises two hooks (712).

16. Load carrier according to claim 15, wherein said hooks (712) and a free end (724) of said vehicle engaging section (720) protrude from the same side of said load carrier bracket (700) and/or wherein said hooks (712) are configured such that they can be engaged with an upper edge portion (619) of said sleeve portion (600), wherein preferably the hooks can be brought in contact with a supporting surface (620) of said upper edge portion (619).

17. Load carrier according to one of claims 11 to 16, said load carrier bracket (700) being partially accommodated in said accommodating space (630) and releasably engaged with said holder (6), wherein said load carrier foot (2) preferably further comprises a tightening member (8) having a tightening member operating portion (81) arranged in said accommodating space (630) between an inner wall (603) of said holder (6) and said load carrier bracket (700), wherein said holder (6) and said load carrier bracket (700) preferably comprise access openings (650, 750) configured to provide tool access to said tightening member operating portion (81).

## Patentansprüche

1. Lastträgerfuß (2) zum Tragen einer Laststange (300) an einem Fahrzeug, wobei der Lastträgerfuß (2) einen Halter (6) umfasst, der zur Aufnahme einer Lastträgerhalterung (700) zum Koppeln des Lastträgerfußes (2) an das Fahrzeug ausgelegt ist, **dadurch gekennzeichnet, dass** der Halter (6) einen Hülsenabschnitt (600) umfasst, der einen Aufnahmebereich (630) definiert, der konfiguriert ist, um die Lastträgerhalterung (700) teilweise aufzunehmen.

2. Lastträgerfuß (2) nach Anspruch 1, wobei mindestens der Hülsenabschnitt (600) durch Biegen eines Blechs integral gebildet ist und einen Überlappungsabschnitt (601) umfasst, an dem zwei Verbindungsabschnitte (612, 614) des gebogenen Blechs überlappt sind, wobei der Überlappungsabschnitt (601) vorzugsweise viereckig oder trapezförmig ausgebildet ist.

3. Lastträgerfuß (2) nach Anspruch 2, wobei die Verbindungsabschnitte (612, 614) durch Materialformung, vorzugsweise durch Clinchen oder Toxen, mit mindestens zwei Verbindungsabschnitten (604) verbunden sind.

4. Lastträgerfuß (2) nach Anspruch 2 oder 3, wobei der Hülsenabschnitt (600) so ausgebildet ist, dass sich der Aufnahmebereich (630) in Längsrichtung zu einem oberen Abschnitt (63) des Halters (6) hin verjüngt.

5. Lastträgerfuß (2) nach Anspruch 4, wobei der Überlappungsabschnitt (601) eine Außenwand (602) des Hülsenabschnitts (600) definiert, und wobei der Hülsenabschnitt (600) ferner eine Innenwand (603) und zwei Seitenwände (605) umfasst, wobei mindestens die Seitenwände (605) in Bezug auf die Längsrichtung geneigt sind, um den verjüngten Aufnahmebereich (630) zu bilden.

6. Lastträgerfuß (2) nach Anspruch 5, wobei der Hülsenabschnitt (600) einen in der Innenwand (603) ausgebildeten Kupplungsabschnitt (61) umfasst, wobei der Kupplungsabschnitt (61) vorzugsweise als Aufnahmeaussparung (607) ausgebildet ist, die zum Tragen eines Spannelements (8) zum Aufbringen einer Druckkraft auf den Kupplungsabschnitt (61) ausgebildet ist, wobei die Aufnahmeaussparung (607) vorzugsweise eine Stützfläche (608), vorzugsweise eine gekrümmte Oberfläche, und eine Öffnung (609) zum Führen eines Abschnitts des Spannelements (8) durch die Innenwand (603) aufweist.

7. Lastträgerfuß (2) nach einem der vorhergehenden Ansprüche, wobei der Hülsenabschnitt (600) einen oberen Kantenabschnitt (619) aufweist, der zumindest teilweise eine obere Öffnung (615) des Hülsenabschnitts (600) definiert, wobei der obere Kantenabschnitt (619) für einen Eingriff mit der Lastträgerhalterung (700) konfiguriert ist.

8. Lastträgerfuß (2) nach Anspruch 7, wobei der obere Kantenabschnitt (619) konvex ausgebildet ist.

9. Lastträgerfuß (2) nach Anspruch 7 oder Anspruch 8, ferner umfassend ein Druckelement (640), vorzugsweise ein Federelement, das konfiguriert ist, um eine Druckkraft auf einen Haltereingriffsabschnitt (710) der Lastträgerhalterung (700) in Richtung des oberen Randabschnitts (619) auszuüben, wobei das Druckelement (640) vorzugsweise in dem Aufnahmebereich (630) angeordnet ist.

10. Lastträgerfuß (2) nach einem der vorhergehenden Ansprüche, wobei der Halter (6) einen unteren Kantenabschnitt (621) umfasst, der zumindest teilweise eine untere Öffnung (622) des Hülsenabschnitts (600) definiert, wobei der untere Kantenabschnitt (621) konfiguriert ist, die Lastträgerhalterung (700) zu kontaktieren und eine Druckkraft auf die Lastträgerhalterung (700) zu übertragen.

11. Lastträger, umfassend einen Lastträgerfuß (2) nach den Ansprüchen 1 bis 10 und eine Lastträgerhalterung (700) zum Koppeln des Lastträgerfußes (2) an ein Fahrzeug, wobei die Lastträgerhalterung (700) einen Fahrzeugeingriffsabschnitt (720) und einen wannenförmigen Kupplungsabschnitt (730) umfasst, wobei sich der wannenförmige Kupplungsabschnitt (730) von dem Fahrzeugeingriffsabschnitt (720) in Längsrichtung der Lastträgerhalterung (700) erstreckt und einen Haltereingriffsabschnitt (710) umfasst, der mit dem Halter (6) des Lastträgerfußes (2) in Eingriff bringbar ist.

12. Lastträger nach Anspruch 11, wobei der wannenförmige Kupplungsabschnitt (730) trichterförmig ist, wobei der Haltereingriffsabschnitt (710) an einem schmalen Ende ausgebildet ist und/oder wobei der wannenförmige Kupplungsabschnitt (730) durchgehend konvex in seiner Längsrichtung ausgebildet ist und eine Außenfläche (702) umfasst, die ausgelegt ist, eine Kraft von dem Halter (6) des Lastträgerfußes (2) aufzunehmen.

13. Lastträger nach einem der Ansprüche 11 und 12, wobei sich der wannenförmige Kupplungsabschnitt (730) im Wesentlichen über die gesamte Länge der Halterung (700) erstreckt und/oder zumindest teilweise eine kastenförmige Form aufweist, vorzugsweise mit zwei Seitenwänden (714) und einer Bodenwand (716), die im Wesentlichen senkrecht zu den Seitenwänden (714) angeordnet ist.

14. Lastträger nach einem der Ansprüche 11 bis 13, wobei ein freies Ende (724) des Fahrzeugeingriffsabschnitts (720) von der Lastträgerhalterung (700) auf einer Seite in eine Richtung vorsteht, die in Bezug auf eine Längsausdehnungsrichtung des wannenförmigen Kupplungsabschnitts (730) abgewinkelt ist oder im Wesentlichen senkrecht dazu steht, und wobei der wannenförmige Kupplungsabschnitt (730) eine Wölbung bereitstellt, die auf einer Seite der Lastträgerhalterung (700) gegenüber der Seite vorgesehen ist, auf der das freie Ende (724) des Fahrzeugeingriffsabschnitts (720) aus der Lastträgerhalterung vorsteht, und/oder wobei der wannenförmige Kupplungsabschnitt (730) die Wölbung in nur einer Richtung bereitstellt, wobei die Wölbung vorzugsweise eine durchgehende und/oder ununterbrochene Wölbung ist.

15. Lastträger nach einem der Ansprüche 11 und 12, wobei der Haltereingriffsabschnitt (710) so konfiguriert ist, dass die Lastträgerhalterung (700) an dem Halter (6) eingehängt werden kann, und wobei der Haltereingriffsabschnitt (710) vorzugsweise zwei Haken (712) umfasst.

16. Lastträger nach Anspruch 15, wobei die Haken (712) und ein freies Ende (724) des Fahrzeugeingriffsabschnitts (720) von der gleichen Seite der Lastträgerhalterung (700) vorstehen und/oder wobei die Haken (712) so konfiguriert sind, dass sie mit einem oberen Kantenabschnitt (619) des Hülsenabschnitts (600) in Eingriff gebracht werden können, wobei vorzugsweise die Haken mit einer Stützfläche (620) des oberen Kantenabschnitts (619) in Kontakt gebracht werden können.

17. Lastträger nach einem der Ansprüche 11 bis 16, wobei die Lastträgerhalterung (700) teilweise in dem Aufnahmebereich (630) aufgenommen und lösbar mit dem Halter (6) in Eingriff gebracht ist, wobei der Lastträgerfuß (2) vorzugsweise weiterhin ein Spannelement (8) umfasst, das einen Spannelement- Betätigungsabschnitt (81) aufweist, der in dem Aufnahmeraum (630) zwischen einer Innenwand (603) des Halters (6) und der Lastträgerhalterung (700) angeordnet ist, wobei der Halter (6) und die Lastträgerhalterung (700) vorzugsweise Zugangsöffnungen (650, 750) umfassen, die konfiguriert sind, um einen Werkzeugzugang zu dem Spannelement-Betätigungsabschnitt (81) bereitzustellen.

## Revendications

1. Pied de support de charge (2) destiné à supporter une barre de toit (300) sur un véhicule, ledit pied de support de charge (2) comprenant un dispositif de retenue (6) apte à recevoir une patte de support de charge (700) destinée à coupler ledit pied de support de charge (2) audit véhicule, **caractérisé en ce que** ledit dispositif de retenue (6) comprend une partie fourreau (600) définissant un espace de logement (630) conçu pour loger en partie ladite patte de support de charge (700).

2. Pied de support de charge (2) selon la revendication 1, dans lequel ladite partie fourreau (600) au moins est formée d'un seul tenant par pliage d'une tôle métallique et comprend une section en chevauchement (601) dans laquelle deux sections assemblées (612, 614) de ladite tôle métallique pliée se chevauchent, ladite section en chevauchement (601) étant de préférence quadrangulaire ou trapézoïdale.

3. Pied de support de charge (2) selon la revendication 2, dans lequel lesdites sections assemblées (612, 614) sont assemblées par formage, de préférence par assemblage-emboutissage ou clinchage Tox, au niveau d'au moins deux parties d'assemblage (604).

4. Pied de support de charge (2) selon la revendication 2 ou 3, dans lequel ladite partie fourreau (600) est formée de manière que ledit espace de logement (630) va en s'amenuisant, dans la direction longitudinale, vers une partie supérieure (63) dudit dispositif de retenue (6).

5. Pied de support de charge (2) selon la revendication 4, dans lequel ladite section en chevauchement (601) définit une paroi extérieure (602) de ladite partie fourreau (600), et ladite partie fourreau (600) comprend en outre une paroi intérieure (603) et deux parois latérales (605), lesdites parois latérales (605) au moins étant inclinées par rapport à la direction longitudinale afin de former ledit espace de logement (630) qui va en s'amenuisant.

6. Pied de support de charge (2) selon la revendication 5, dans lequel ladite partie fourreau (600) comprend une partie de couplage (61) formée dans ladite paroi intérieure (603), ladite partie de couplage (61) étant de préférence réalisée sous la forme d'un évidement récepteur (607) conçu pour supporter un élément de serrage (8) permettant d'appliquer une force de poussée sur ladite partie de couplage (61), ledit évidement récepteur (607) présentant de préférence une surface de support (608), de préférence incurvée, et une ouverture (609) permettant à une partie dudit élément de serrage (8) de traverser ladite paroi intérieure (603).

7. Pied de support de charge (2) selon l'une des revendications précédentes, dans lequel ladite partie fourreau (600) présente une partie bord supérieur (619) définissant au moins partiellement une ouverture supérieure (615) de ladite partie fourreau (600), ladite partie bord supérieur (619) étant conçue pour s'emboîter avec ladite patte de support de charge (700).

8. Pied de support de charge (2) selon la revendication 7, dans lequel ladite partie bord supérieur (619) est de forme convexe.

9. Pied de support de charge (2) selon la revendication 7 ou la revendication 8, comprenant en outre un élément de sollicitation (640), de préférence un élément formant ressort, conçu pour appliquer une force de poussée sur une section d'emboîtement avec le dispositif de retenue (710) de ladite patte de support de charge (700) vers ladite partie bord supérieur (619), ledit élément de sollicitation (640) étant de préférence agencé dans ledit espace de logement (630).

10. Pied de support de charge (2) selon l'une des revendications précédentes, dans lequel ledit dispositif de retenue (6) comprend une partie bord inférieur (621) définissant au moins partiellement une ouverture inférieure (622) de ladite partie fourreau (600), ladite partie bord inférieur (621) étant conçue pour toucher ladite patte de support de charge (700) et pour transférer une force de poussée sur ladite patte de support de charge (700).

11. Support de charge comprenant un pied de support de charge (2) selon les revendications 1 à 10 ainsi qu'une patte de support de charge (700) permettant de coupler ledit pied de support de charge (2) à un véhicule, ladite patte de support de charge (700) comprenant une section d'emboîtement avec le véhicule (720) et une partie de couplage en creux (730), ladite partie de couplage en creux (730) s'étendant à partir de ladite section d'emboîtement avec le véhicule (720) dans la direction longitudinale de la patte de support de charge (700) et comprenant une section d'emboîtement avec le dispositif de retenue (710) susceptible de s'emboîter avec ledit dispositif de retenue (6) dudit pied de support de charge (2).

12. Support de charge selon la revendication 11, dans lequel ladite partie de couplage en creux (730) est en forme d'entonnoir, ladite section d'emboîtement avec le dispositif de retenue (710) étant formée au niveau d'une extrémité étroite, et/ou dans lequel ladite partie de couplage en creux (730) est de forme convexe continue dans sa direction longitudinale et comprend une surface extérieure (702) apte à recevoir une force provenant dudit dispositif de retenue (6) dudit pied de support de charge (2).

13. Support de charge selon l'une des revendications 11 et 12, dans lequel ladite partie de couplage en creux (730) s'étend sur sensiblement toute la longueur de la patte (700) et/ou présente au moins partiellement une forme de boîte, présentant de préférence deux parois latérales (714) et une paroi de fond (716) agencée de façon sensiblement perpendiculaire auxdites parois latérales (714).

14. Support de charge selon l'une des revendications 11 à 13, dans lequel une extrémité libre (724) de la section d'emboîtement avec le véhicule (720) fait saillie de ladite patte de support de charge (700) sur un côté, dans une direction sensiblement perpendiculaire ou en biais par rapport à une direction d'extension longitudinale de la partie de couplage en creux (730), ladite partie de couplage en creux (730) assurant un renflement prévu sur un côté de ladite patte de support de charge (700) qui est opposé au côté sur lequel ladite extrémité libre (724) de la section d'emboîtement avec le véhicule (720) fait saillie de ladite patte de support de charge (700), et/ou ladite partie de couplage en creux (730) assurant ledit renflement dans une seule direction, ledit renflement étant de préférence continu et/ou ininterrompu.

15. Support de charge selon l'une des revendications 11 et 12, dans lequel ladite section d'emboîtement avec le dispositif de retenue (710) est conçue de façon que ladite patte de support de charge (700) puisse être accrochée sur ledit dispositif de retenue (6), ladite section d'emboîtement avec le dispositif de retenue (710) comprenant de préférence deux crochets (712).

16. Support de charge selon la revendication 15, dans lequel lesdits crochets (712) et une extrémité libre (724) de ladite section d'emboîtement avec le véhicule (720) font saillie du même côté de ladite patte de support de charge (700) et/ou dans lequel lesdits crochets (712) sont conçus de façon à pouvoir s'emboîter avec une partie bord supérieur (619) de ladite partie fourreau (600), lesdits crochets pouvant de préférence être mis en contact avec une surface de support (620) de ladite partie bord supérieur (619).

17. Support de charge selon l'une des revendications 11 à 16, ladite patte de support de charge (700) logeant partiellement dans ledit espace de logement (630) et étant emboîtée de façon amovible avec ledit dispositif de retenue (6), ledit pied de support de charge (2) comprenant en outre de préférence un élément de serrage (8) présentant une partie d'actionnement d'élément de serrage (81) agencée dans ledit espace de logement (630) entre une paroi intérieure (603) dudit dispositif de retenue (6) et ladite patte de support de charge (700), ledit dispositif de retenue (6) et ladite patte de support de charge (700) comprenant de préférence des ouvertures d'accès (650, 750) conçues pour permettre à un outil d'accéder à ladite partie d'actionnement d'élément de serrage (81).
